# EUROPÄISCHE PATENTSCHRIFT

(11) **EP 2 771 302 B1**
(45) Veröffentlichungstag und Bekanntmachung des Hinweises auf die Patenterteilung: **25.05.2016**
(21) Anmeldenummer: 12791242.6
(22) Anmeldetag: 18.10.2012
(51) Int. Cl.: C04B 7/48, F23G 5/04, F23G 5/46, F26B 23/02, F23G 7/00

(54) **VERFAHREN UND VORRICHTUNG ZUM AUFARBEITEN VON NASSEN, ORGANISCHE KOMPONENTEN ENTHALTENDEN ABFALLSTOFFEN**
METHOD AND DEVICE FOR REPROCESSING WET WASTE MATERIALS CONTAINING ORGANIC COMPONENTS
PROCÉDÉ ET DISPOSITIF DE TRAITEMENT DE DÉCHETS HUMIDES CONTENANT DES CONSTITUANTS ORGANIQUES

(30) Priorität: 25.10.2011 AT 15662011
(43) Veröffentlichungstag der Anmeldung: 03.09.2014
(60) Teilanmeldung: 14001560.3
(73) Patentinhaber: Holcim Technology Ltd., 8645 Rapperswil-Jona (CH)
(72) Erfinder: GASSER, Urs, CH-5235 Rüfenach (CH)
(74) Vertreter: Keschmann, Marc
(86) Internationale Anmeldenummer: PCT/IB2012/002087
(87) Internationale Veröffentlichungsnummer: WO 2013/061127

(56) Entgegenhaltungen:
- EP-A1- 2 039 663
- EP-A2- 0 496 290
- WO-A1-94/29231
- DE-A1- 3 533 775
- DE-A1- 3 542 004
- JP-A- 2002 143 829
- JP-A- 2006 035 189

## Beschreibung

Die Erfindung betrifft ein Verfahren zum Aufarbeiten von nassen, organische Komponenten enthaltenden Abfallstoffen, insbesondere Schlämmen in einer Zementklinkerherstellungsanlage, in welcher Rohmehl im Gegenstrom zu den heißen Abgasen eines Klinkerofens in einem Vorwärmer vorgewärmt und in einem mit alternativen Brennstoffen befeuerten Kalzinator kalziniert wird, wobei die nassen Abfallstoffe unter Verwendung eines aus der Vorwärmerabwärme erzeugten Heißgases in einem Trocknungsaggregat getrocknet werden und die getrockneten Abfallstoffe und die Trocknerabgase aus dem Trocknungsaggregat ausgetragen werden.

Weiters betrifft die Erfindung eine Vorrichtung zum Aufarbeiten von nassen, organische Komponenten enthaltenden Abfallstoffen, insbesondere Schlämmen in einer Zementklinkerherstellungsanlage umfassend einen Klinkerofen, an dessen ausgabeseitigem Ende ein Klinkerkühler angeschlossen ist und an dessen aufgabeseitigem Ende ein Kalzinator und einen Vorwärmer angeordnet sind, in denen Rohmehl im Gegenstrom zu den heißen Abgasen des Klinkerofens vorgewärmt und kalziniert wird, und ein Trocknungsaggregat für die nassen Abfallstoffe, das mit einer Heißgasleitung verbunden ist, die von Abwärme aus dem Vorwärmer gespeist ist, und dem ein Separator zum Abtrennen der Trocknungsabgase von den getrockneten Abfallstoffen nachgeschaltet ist.

Unter nassen Abfallstoffen werden im Rahmen der Erfindung solche mit einem Wassergehalt von > 30% verstanden. Nasse Abfallstoffe, die organische Komponenten enthalten, stammen zum Beispiel aus Raffinerien oder Kohleminen.

Um solche Abfallstoffe, wie insbesondere Schlämme, die im ungünstigen Fall einen Anteil an volatilen organischen Komponenten von nur 0,1 bis 0,3 % aufweisen, in der Zementindustrie als alternative Brennstoffe nutzen zu können, ist eine Vorbehandlung bzw. Aufarbeitung einschließlich einer Trocknung und ggf. einer Vermahlung erforderlich, um daraus einen hochwertigen, pulverisierten und leicht dosierbaren, d.h. trockenen, Brennstoff zu erhalten. Dafür ist beispielsweise eine Kugelmühle mit übergroßer Trocknungskammer sowie nachgeschaltetem Sichter und Filter geeignet. Dabei ergeben sich aber die folgenden Schwierigkeiten, wenn man für den Aufarbeitungsprozess energetische Synergien mit einem Zementklinkerherstellungsprozess nutzen möchte. Um sicherzustellen, dass die Trocknung auch bei einem hohen Wassergehalt der nassen Abfallstoffe zu einer ausreichenden Reduktion des Wassergehalts führt, ist eine in Abhängigkeit vom Wassergehalt regelbare, hohe Heißgastemperatur erforderlich. Das Heißgas muss aus Sicherheitsgründen möglichst inert sein, wobei ein 02 Gehalt von weniger als 5% angestrebt wird. Dies bedeutet, dass ein einfacher Heißgaserzeuger mit Luftverdünnung nicht geeignet ist.

Typischerweise erfolgt die Trocknung daher unter Einsatz von hochwertigen teuren Brennstoffen, wie Erdgas oder Diesel. Wirtschaftlicher wäre es, die Abwärme aus dem Vorwärmer der Zementklinkerherstellungsanlage für die Trocknung zu nutzen.

Eine weitere Schwierigkeit liegt darin, dass die bei der Trocknung entstehenden flüchtigen organischen Komponenten unter anderem aus Umweltschutzgründen und aus Gründen der Geruchsbelästigung aus den Trocknerabgasen entfernt werden müssen. Dies erfordert zwingend eine nachgeschaltete Oxidationsstufe, d.h. eine thermische Reinigung des Trocknungsabgases, was einen zusätzlichen Energiebedarf mit sich bringt. Die Verwendung der Trocknerabgase mit ihrem hohen Wassergehalt als Verbrennungsluft in der Hauptfeuerung des Klinkerofens ist auf Grund der hierdurch bewirkten starken Abkühlung der Hauptflamme bzw. der Sinterzone nicht zulässig. Die einfache Rückführung der Trocknerabgase in den Klinkerofen über das Klinkerkühlerluftgebläse fällt daher als Lösung für die Entfernung der volatilen organischen Komponenten weg.

Bei der Herstellung von Zementklinker wird Rohmehl vorgewärmt, restgetrocknet, kalziniert, zu Klinker gebrannt und dann gekühlt. Nach diesem Trockenverfahren arbeitende Anlagen bestehen aus Vorwärmer, Kalzinator, Tertiärluftleitung, Drehofen und Klinkerkühler. Die Energiezuführung für die Stoffumwandlung in solchen Anlagen erfolgt durch Brennstoffzufuhr in den Drehofen und in den Kalzinator. Die im Klinkerkühler erhitzte Luft wird zum Teil als so genannte Sekundärluft dem Drehofen und zum Teil als so genannte Tertiärluft dem Kalzinator zugeführt. Die Abgase des Drehofens werden durch eine Ofeneinlaufkammer und eine darüber befindliche Strömungseinschnürung, der so genannten Gutsperre, zum Kalzinator geführt, durchströmen diesen und werden zusammen mit den im Kalzinator erzeugten Abgasen, bestehend aus Rauchgas des Kalzinator-Brennstoffes und CO2, in den Vorwärmer abgeführt.

Der Vorwärmer besteht meist aus einem oder mehreren Strängen und jeder Strang aus mehreren Zyklonstufen, die jeweils als Schwebegaswärmetauscher ausgebildet sein können. Das trockene Zementrohmehl wird dem Steigrohr der obersten Zyklonstufe aufgegeben, durchwandert von oben nach unten die Zyklonstufen und wird aus der vorletzten (zweituntersten) Zyklonstufe in den Kalzinator geleitet. Im Kalzinator wird das heiße Rohmehl nahezu völlig entsäuert und strömt mit dem Kalzinator-Abgas in die unterste Zyklonstufe, wird dort abgeschieden, der Ofeneinlaufkammer zugeführt und gelangt durch diese als Heißmehl in den Drehofen. Das Heißmehl wird im Drehofen restentsäuert und beim Sinterungsprozess zu Klinker gebrannt.
Ein Verfahren und eine Vorrichtung nach den unabhängigen Ansprüchen 1 und 9 wird in WO 94/29231 Offenbart.
Die Erfindung zielt nun darauf ab, nasse Abfallstoffe, insbesondere Schlämme mit einem hohen Anteil an volatilen organischen Komponenten, im Rahmen eines Zementklinkerherstellungsprozesses aufzuarbeiten, um einen alternativen Brennstoff zu erhalten, wobei für die Aufarbeitung möglichst kein zusätzlicher Primärbrennstoffeinsatz für das Trocknen oder die Abluftreinigung erforderlich sein soll. Weiters soll die Erfindung mit möglichst wenigen baulichen Adaptierungen der bestehenden Anlagenkomponenten auskommen.

Zur Lösung dieser Aufgabe besteht die Erfindung gemäß einem ersten Aspekt bei einem Verfahren gemäß Anspruch 1. Dadurch, dass die Trocknerabgase in den Kalzinator, und zwar bevorzugt im Wesentlichen ausschließlich in den Kalzinator, geleitet werden, werden die in den Trocknerabgasen enthaltenen organischen Komponenten ohne zusätzlichen Primärbrennstoffeinsatz thermisch verwertet. Da die Trocknerabgase eine Temperatur von unter 100°C haben können, führt die Einleitung in den Kalzinator zu einer deutlichen Abkühlung im Kalzinator, die grundsätzlich unerwünscht ist. Die Abkühlung kann aber in einfacher Weise durch Erhöhung des Brennstoffeinsatzes im Kalzinator vermieden werden, wobei die zusätzliche Brennstoffmenge größtenteils oder sogar ausschließlich von alternativen Brennstoffen gebildet sein kann. Mit der Erfindung wird somit ein Wärmekreislauf in der Zementklinkerherstellungsanlage erzeugt, der in den herkömmlichen Gasstrom integriert wird. Der Wärmekreislauf besteht aus dem Heißgasstrom, mit dem die Abwärme aus dem Vorwärmer dem Trocknungsaggregat zur Verfügung gestellt wird, dem Abgasstrom des Trocknungsaggregates, der in den Kalzinator geleitet wird, und dem Kalzinatorabgasstrom, der in den Vorwärmer strömt. Dem Kreislauf wird hierbei beim Durchlaufen des Trocknungsaggregats Wärme entzogen. Dem Kreislauf wird auf Grund der zusätzlichen Einbringung von alternativen Brennstoffen im Kalzinator Wärme in etwa gleichem Ausmaß zugeführt, sodass der Gesamtverbrauch an Primärbrennstoff gleich ist wie bei einer vergleichbaren Zementofenanlage, die keine integrierte Altstoffaufarbeitung aufweist. Das bedeutet, dass der bei herkömmlichen Schlammtrocknungs- und Oxidationsanlagen erforderliche Primärbrennstoffbedarf bei der Erfindung vollständig durch Alternativbrennstoff substituiert wird. Die Kreislaufführung hat weiters den Vorteil, dass eine inerte Atmosphäre im Trocknungsaggregat ohne großen Regelungsaufwand sichergestellt ist, da die aus dem Vorwärmer entnommenen Heißgase immer weniger als 5% Sauerstoff enthalten.

Um den baulichen Aufwand für die Zuführung der Trocknerabgase in den Kalzinator zu reduzieren, wird bevorzugt so vorgegangen, dass das Einleiten der Trocknungsabgase in den Kalzinator mit der Tertiärluft erfolgt. Es wird somit der Tertiärluftkanal genützt, um die Trocknerabgase einzuleiten, sodass die Notwendigkeit einer gesonderten Zuführleitung in den Kalzinator entfällt.

Grundsätzlich ist es denkbar, die Trocknerabgase direkt in den Kalzinator einzuführen, d.h. ohne thermische Behandlung. Die direkte Einführung via Tertiärluft erhöht allerdings den Gesamtwärmeverbrauch der Anlage, da die Trocknerabgase relativ niedrige Temperaturen (150°C und darunter) aufweisen. Eine Verbesserung der Wirtschaftlichkeit wird in diesem Zusammenhang gemäß einer bevorzugten Verfahrensweise dadurch erzielt, dass die Trocknerabgase vor dem Einleiten in den Kalzinator durch den Klinkerkühler geleitet werden. Dadurch wird die Temperatur der Trocknerabgase unter Ausnutzung der Wärme des Klinkers erhöht, und zwar je nach der Abgasmenge aus dem Trockner bevorzugt auf Temperaturen von mindestens 300°C. Die Einbringung der Trocknerabgase in den Klinkerkühler erfolgt beispielsweise über eines jener Gebläse, über die sonst Umgebungsluft in den Klinkerkühler angesaugt wird. Die Trocknerabgase verlassen den Klinkerkühler über dieselbe Abzugsöffnung in der Kühlerdecke, über die auch die übrige Tertiärluft abgezogen und in der Folge dem Kalzinator zugeführt wird.

Ein großer Teil der in den Klinkerkühler eingesaugten Umgebungsluft wird als sogenannte Sekundärluft in den Klinkerofen eingebracht. Wenn nun die Trocknerabgase einen Teil der Kühlerluft bilden, würden diese teilweise als Sekundärluft auch in die Hauptflamme im Drehofen gelangen, was den Brennprozess beeinträchtigen kann. Eine bevorzugte Weiterbildung sieht daher vor, dass die Einleitung der Trocknungsabgase in den Klinkerkühler an einer Stelle des Klinkerkühlers erfolgt, die vertikal unterhalb des Tertiärluftabzuges liegt. Durch diese Maßnahme wird begünstigt, dass die Trocknerabgase den Klinkerkühler möglichst nur in vertikaler Richtung durchströmen und hauptsächlich vom Tertiärluftabzug erfasst werden können.

Für die Trocknung der nassen Abfallstoffe ist es wesentlich, dass das in das Trocknungsaggregat eingebrachte Heißgas eine ausreichend hohe Temperatur hat. Die am Ende des Vorwärmers abgezogene Abwärme kann unter Umständen hierfür nicht ausreichen. In diesem Zusammenhang ist erfindungsgemäß vorgesehen, dass die Ableitung der Abwärme des Vorwärmers an wenigstens zwei verschiedenen Stellen des Vorwärmers mit voneinander verschiedenem Temperaturniveau erfolgt, sodass wenigstens zwei Abwärmeströme entstehen, und dass die Temperatur des dem Trocknungsaggregat zugeleiteten Heißgases durch Wahl des Mischungsverhältnisses der Abwärmeströme eingestellt wird. Wenn somit zwei unterschiedliche Temperaturniveaus der Abwärme bzw. des Heißgases zur Verfügung stehen, wird die Möglichkeit geschaffen, die Temperatur in einfacher Art und Weise zu regeln und es können bei Bedarf höhere Temperaturen erzielt werden als mit dem lediglich am Ende des Vorwärmers abgezogenen Heißgas. Um Abwärme auf einem höheren Temperaturniveau aus dem Vorwärmer zu gewinnen, wird bevorzugt so vorgegangen, dass der Vorwärmer eine Mehrzahl von Vorwärmerstufen aufweist und der eine Abwärmestrom von nach der letzten Vorwärmerstufe abgezweigtem Heißgas gebildet wird und dass der andere Wärmestrom von am Austritt einer vorgereihten Vorwärmerstufe, insbesondere der ersten Vorwärmerstufe abgezweigtem Heißgas gebildet wird.

Die Einstellung der Temperatur des dem Trocknungsaggregat zugeführten Heißgases wird wie erwähnt durch Einstellung der Volumenströme der unterschiedlich heißen Heißgase sowie nachfolgendes Mischen der beiden Heißgasströme erreicht. Bevorzugt wird hierbei so vorgegangen, dass die vom Vorwärmer abgezweigten Heißgasströme einem Mischzyklon aufgegeben werden und dass das im Mischzyklon ausgeschiedene Heißmehl dem Kalzinator oder dem Rohmehl rückgeführt wird.

Damit die Trocknung der nassen Abfallstoffe gewährleistet ist, ist es vorteilhaft, wenn das dem Trocknungsaggregat zugeführte Heißgas eine Temperatur von 300 - 600°C, insbesondere 500° - 600°C aufweist.

In vorteilhafter Weise gelangt ein Trocknungsaggregat zum Einsatz, welches als Mahltrockner ausgebildet ist, sodass in einem Aggregat sowohl die Trocknung als auch die Mahlung vorgenommen werden kann.

Zur Lösung der der Erfindung zugrunde liegenden Aufgabe ist gemäß einem zweiten Aspekt der Erfindung eine Vorrichtung gemäß Anspruch 9 vorgesehen. Eine strömungsmäßige Verbindung kann hierbei entweder eine direkte Leitung zwischen dem Separator und dem Kalzinator umfassen oder über bestehende Komponenten und/oder Einbauten der Zementklinkerherstellungsanlage führen. Eine bevorzugte Weiterbildung sieht zum Beispiel vor, dass ein Abschnitt der strömungsmäßigen Verbindung des Separators mit dem Kalzinator von einem Tertiärluftkanal gebildet ist, der den Tertiärluftabzug des Klinkerkühlers mit dem Kalzinator verbindet. Weiters kann vorgesehen sein, dass die strömungsmäßige Verbindung des Separators mit dem Kalzinator eine Trocknerabgasleitung umfasst, die in den Klinkerkühler mündet.

Um zu verhindern, dass die in den Klinkerkühler eingebrachten Trocknerabgase als Sekundärluft in den Klinkerofen gelangen, ist vorgesehen, dass die Trocknerabgasleitung an einer Stelle in den Klinkerkühler mündet, die unterhalb des Tertiärluftabzuges liegt.

Im Zusammenhang mit der Gewinnung bzw. Entnahme von Heißgas für das Trocknungsaggregat ist erfindungsgemäß vorgesehen, dass der Vorwärmer wenigstens zwei voneinander in Durchströmungsrichtung beabstandete Entnahmestellen zum Abzweigen von Heißgas über jeweils eine Zweigleitung aufweist, dass Regelorgane, insbesondere Schieber zum Einstellen der Volumenströme des entnommenen Heißgases vorgesehen sind und dass die Heißgasströme einer Mischeinrichtung zugeführt sind, deren Austrittsöffnung mit der Heißgasleitung verbunden ist. Weiters ist es vorteilhaft, wenn ein Temperaturfühler zum Messen der Temperatur des Heißgases in der Heißgasleitung vorgesehen ist, wobei die Messwerte des Temperaturfühlers einer Steuereinrichtung zugeführt sind, die mit den Regelorganen zur Einstellung einer Heißgastemperatur von 300 - 600°C, insbesondere 500° - 600°C zusammenwirkt. Im Falle eines Vorwärmers, der eine Mehrzahl von hintereinander geschalteten Vorwärmerstufen, insbesondere Schwebegaswärmetauschern aufweist, ist die eine Entnahmestelle bevorzugt nach der letzten Vorwärmerstufe und die andere Entnahmestelle bevorzugt am Austritt einer vorgereihten Vorwärmerstufe, insbesondere der ersten Vorwärmerstufe angeordnet. Die Mischeinrichtung ist mit Vorteil von einem Mischzyklon gebildet, dessen Feststoffaustrag für das ausgeschiedene Heißmehl mit dem Kalzinator oder einer Rohmehlaufgabe- oder -transporteinrichtung verbunden ist.

Das Trocknungsaggregat ist bevorzugt als Mahltrockner ausgebildet.

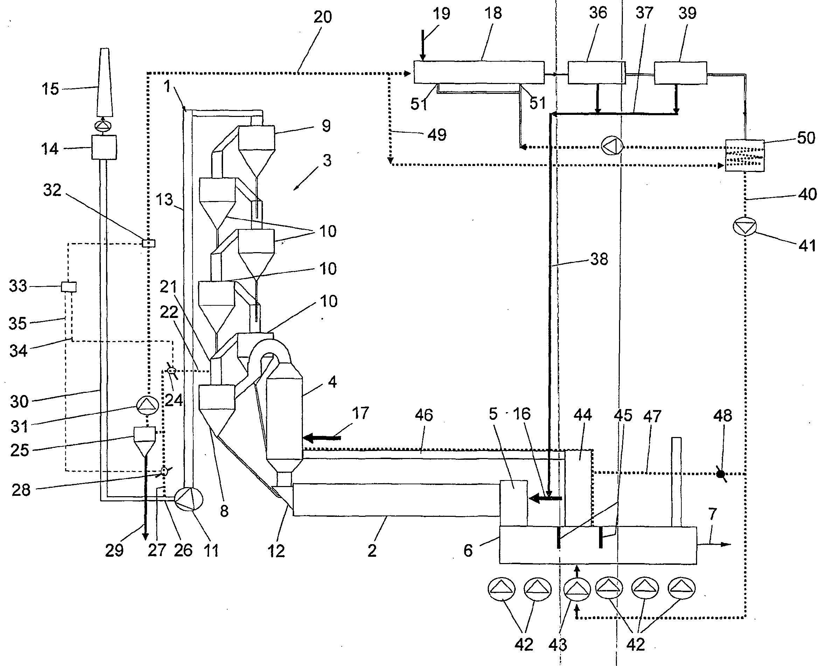

Die Erfindung wird nachfolgend an Hand eines in der Zeichnung schematisch dargestellten Ausführungsbeispiels näher erläutert. In der Zeichnung ist eine Zementklinkerherstellungsanlage dargestellt, in welcher an einer schematisch mit 1 dargestellten Stelle aufgegebenes Rohmehl im Gegenstrom zu den heißen Abgasen eines Klinkerofens 2 in einem Vorwärmer 3 vorgewärmt und in einem Kalzinator 4 kalziniert wird. Die Austragsöffnung des Kalzinators 4 ist an das Aufgabeende des Klinkerofens 2 angeschlossen. Der Klinker verlässt den Klinkerofen 2 an der mit 5 bezeichneten Stelle und wird in einem Klinkerkühler 6 gekühlt. Der gekühlte Klinker verlässt den Klinkerkühler 6 an der mit 7 bezeichneten Stelle. Der Vorwärmer 3 kann einen oder mehrere Vorwärmerstränge aufweisen. In der Zeichnung ist ein Strang dargestellt. Der Strang weist eine Mehrzahl von hintereinander geschalteten Schwebegaswärmetauschern auf, wobei der erste Schwebegaswärmetauscher mit 8, der letzte Schwebegaswärmetauscher mit 9 und die dazwischen liegenden Schwebegaswärmetauscher mit 10 bezeichnet sind. Das Ofengebläse 11 erzeugt den erforderlichen Unterdruck, damit das auf der Heißmehlaufgabeseite 12 des Klinkerofens 2 austretende Klinkerofenabgas durch den Kalzinator 4 und die hintereinander geschalteten Schwebegaswärmetauscher 8, 10 und 9 und den Heißgasabzug 13 gezogen wird. Das abgezogene Heißgas verlässt die Klinkerherstellungsanlage nach dem Passieren einer Heißgasreinigung 14 über den Schlot 15.

Der Feuerung des Klinkerofens 2 wird, wie schematisch mit 16 dargestellt, Brennstoff zugeführt. Die Brennstoffaufgabe für die Feuerung des Kalzinators 4 ist schematisch mit 17 dargestellt.

Für die Aufarbeitung von Schlämmen ist ein Mahltrockner 18 vorgesehen, dem die Schlämme an der Stelle 19 aufgegeben werden. Zur Trocknung der Schlämme wird dem Mahltrockner 18 Heißgas über die Heißgasleitung 20 zugeführt. Die Heißgasleitung 20 wird von aus dem Vorwärmer 3 abgezogenem Heißgas gespeist. Das Heißgas wird an zwei Entnahmestellen aus dem Vorwärmer 3 abgezogen. Die erste Entnahmestelle 21 befindet sich am Ausgang des ersten Schwebegaswärmetauschers 8. Die für die Entnahme des Heißgases aus dem Wärmetauscherstrang vorgesehene Zweigleitung ist mit 22 bezeichnet. In der Zweigleitung 22 ist ein Regelorgan in der Form eines Schiebers 24 angeordnet, mit dem die abgezogene Heißgasmenge eingestellt werden kann. Das an der Entnahmestelle 21 abgezogene Heißgas wird einem Mischzyklon 25 zugeführt. Ein zweiter Heißgasstrom wird an der Entnahmestelle 26 abgezogen, die sich nach dem letzten Schwebegasewärmetauscher 9 und nach dem Ofengebläse 11 befindet. Die entsprechende Zweigleitung 27 weist ebenfalls ein Regelorgan 28 in der Form eines Schiebers auf, um die an der Stelle 26 entnommene Heißgasmenge regeln zu können. Auch der an der Entnahmestelle 26 abgezogene Heißgasstrom wird dem Mischzyklon 25 zugeführt. Das im Mischzyklon 25 ausgeschiedene Heißmehl wird über den Feststoffaustrag 29 an geeigneter Stelle, beispielsweise über die Ofenmehlaufgabe in den Prozess rückgeführt. Das Heißgas wird mit Hilfe des Abzugsgebläses 31 aus dem Mischzyklon 25 abgezogen und wie bereits erwähnt über die Heißgasleitung 20 dem Mahltrockner 18 zugeführt. Über die Drehzahl des Abzugsgebläses 31 kann die dem Mahltrockner 18 zur Verfügung gestellte Heißgasmenge eingestellt werden.

Die Temperatur des in der Heißgasleitung 20 geführten Heißgases wird mit Hilfe eines Temperaturfühlers 32 gemessen, wobei die Messwerte des Temperaturfühlers einer Steuereinrichtung 33 zugeführt sind. Die Steuereinrichtung 33 ist über die Steuerleitungen 34 und 35 mit den Regelorganen 24 bzw. 28 verbunden, sodass die an den Entnahmestellen 21 und 26 abgezogene Heißgasmengen in Abhängigkeit von der jeweils gewünschten Temperatur geregelt werden können.

Der aus dem Mahltrockner 18 austretende getrocknete und gemahlene Schlamm wird einem als Sichter ausgeführten Separator 36 zugeführt, in dem der getrocknete, gemahlene Schlamm vom Trocknerabgas getrennt wird. Der getrocknete und gemahlene Schlamm wird bei 37 aus dem Separator 36 ausgetragen und kann entweder für eine spätere Verwendung als Brennstoff gelagert werden oder unmittelbar über eine Leitung 38 dem Brennstoffeintrag 16 der Hauptfeuerung des Klinkerofens 2 zugegeben werden. Das Trocknerabgas wird in der Folge durch einen Filter 39 geführt, in dem Brennstofffeintanteile aus dem Trocknerabgas entfernt und ebenfalls dem Brennstoffeintrag zugeführt werden. Das gereinigte Trocknerabgas wird in der Folge durch die Trocknerabgasleitung 40 geführt, wobei der Trocknerabgastransport durch das Gebläse 41 sichergestellt ist.

Der Klinkerkühler 6 weist eine Mehrzahl von Gebläsen 42 und 43 auf, wobei die Trocknerabgasleitung 40 an das Gebläse 43 angeschlossen ist, sodass das Trocknerabgas dem Klinkerkühler 6 zugeführt wird. Das Trocknerabgas durchläuft den Klinkerkühler 6 im Wesentlichen in vertikaler Richtung und verlässt den Klinkerkühler 6 über den Tertiärluftabzug 44. Um zu verhindern, dass das in den Klinkerkühler 6 eingebrachte Trocknerabgas als Sekundärluft in den Klinkerkühler 2 gelangt, sind vor und nach dem Gebläse 43 Hängewände 45 angeordnet. Das über den Tertiärluftabzug 44 abgezogene Trocknerabgas wird gemeinsam mit einem Teil der über die Gebläse 42 in den Klinkerkühler 6 eingebrachten Umgebungsluft in den Tertiärluftkanal 46 eingeleitet, wobei der Tertiärluftkanal 46 im Kalzinator 4 mündet. Das auf diese Art und Weise in den Kalzinator 4 eingebrachte Trocknerabgas wird mit Hilfe der Kalzinatorfeuerung weiter erhitzt, wobei die Kalzinatorfeuerung hauptsächlich mit alternativen Brennstoffen betrieben wird. Damit schließt sich der durch die Integration der erfindungsgemäßen Abfallaufbereitung in die Zementklinkerherstellungsanlage ausgebildete zusätzliche Wärmekreislauf. In diesem Wärmekreislauf wird das in den Kalzinator 4 eingebrachte Trocknerabgas im Kalzinator auf Temperaturen von 700 bis 900, insbesondere 850°C erhitzt und dementsprechend weist das an der Entnahmestelle 21 abgezogene Heißgas eine Temperatur von ca. 850°C auf. Nach dem Passieren des Vorwärmers 3 weist das Heißgas an der Entnahmestelle 26 eine Temperatur von 250 bis 350°C, insbesondere 300°C auf. Durch Wahl des Mischungsverhältnisses zwischen dem an der Entnahmestelle 21 abgezogenen Heißgas und dem an der Entnahmestelle 26 abgezogenen Heißgas kann die dem Mahltrockner 18 zugeführte Heißgastemperatur zwischen 250°C und 850°C eingestellt werden. In der Praxis ist die Temperatur des dem Mahltrockner 18 zugeführten Heißgases jedoch meist durch die Temperaturfestigkeit des Abzugsgebläses 31 beschränkt, sodass Maximaltemperaturen von 550°C realistisch sind. Das am Ausgang des Separators abgezogene Trocknerabgas weist eine Temperatur von ca. 100°C auf. Dadurch, dass das Trocknerabgas durch den Klinkerkühler 6 geleitet wird, kann die Temperatur des Trocknerabgases auf Werte von 300 bis 400°C, insbesondere 350°C erhöht werden, sodass der zusätzliche Wärmebedarf im Kalzinator, der erforderlich ist, um den durch die Einbringung der Trocknerabgase hervorgerufenen Wärmeverlust auszugleichen, minimiert wird, wobei dieser zusätzliche Wärmebedarf ohne weiteres durch eine Erhöhung der in den Kalzinator 4 eingebrachten Menge an alternativen Brennstoffen gedeckt werden kann.

Sofern gewünscht, kann eine Teilmenge des Trocknerabgases über eine Zweigleitung 47 unter Umgehung des Klinkerkühlers 6 auch unmittelbar dem Tertiärluftkanal 46 aufgegeben werden. Das Regelorgan 48 dient hierbei der Einstellung der über die zweigleitung 47 abgezweigten Heißgasmenge.

Die für den Betrieb des Mahltrockners 18 erforderliche Sperrluft wird von einer über die Leitung 49 von der Heißgasleitung 20 abgezweigten Teilmenge gebildet. Das über die Leitung 49 abgezweigte Heißgas wird einem Wärmetauscher 50 zugeführt, in dem es mit dem Trocknerabgas auf Werte von unter 100°C abgekühlt wird. Das abgekühlte Heißgas wird dem Mahltrockner 18 als Sperrluft über die Sperrluftanschlüsse 51 zugeführt.

Die für die erfindungsgemäße Abfallaufarbeitung erforderlichen Modifikationen der Klinkerherstellungsanlage beschränken sich auf die Heißgasanschlüsse an der Entnahmestelle 21 und an der Entnahmestelle 26, die Anordnung der Tertiärluftentnahme an der Kühlerdecke und das größere Kalzinatorvolumen. Eventuell ist auch ein größerer Tertiärluftleitungsquerschnitt erforderlich. Die erfindungsgemäße Abfällaufarbeitung ist die wirtschaftlichste Art, große Mengen an Schlämmen mit hohem Gehalt an organischen Komponenten und Wasser einzusetzen. Die einzige reale Alternative wäre es, die Schlämme direkt in den Kalzinator einzubringen, was aber derzeit nicht abschätzbare Probleme hinsichtlich der Eintragsschwankungen mit sich bringen würde.

## Patentansprüche

1. Verfahren zum Aufarbeiten von nassen, organische Komponenten enthaltenden Abfallstoffen in einer Zementklinkerherstellungsanlage, insbesondere Schlämmen in einer Zementklinkerherstellungsanlage, in welcher Rohmehl im Gegenstrom zu den heißen Abgasen eines Klinkerofens in einem Vorwärmer vorgewärmt und in einem mit alternativen Brennstoffen befeuerten Kalzinator kalziniert wird, wobei die nassen Abfallstoffe unter Verwendung eines aus der Vorwärmerabwärme erzeugten Heißgases in einem Trocknungsaggregat getrocknet werden, und die getrockneten Abfallstoffe und die Trocknerabgase aus dem Trocknungsaggregat ausgetragen werden und die Trocknerabgase in den Kaizinator eingeleitet werden, **dadurch gekennzeichnet, dass** die Ableitung der Abwärme des Vorwärmers an wenigstens zwei verschiedenen Stellen des Vorwärmers mit voneinander verschiedenem Temperaturniveau erfolgt, sodass wenigstens zwei Abwärmeströme entstehen, und dass die Temperatur des dem Trocknungsaggregat zugeleiteten Heißgases durch Wahl des Mischungsverhältnisses der Abwärmeströme eingestellt wird.

2. Verfahren nach Anspruch 1, **dadurch gekennzeichnet, dass** das Einleiten der Trocknungsabgase in den Kalzinator mit der Tertiärluft erfolgt.

3. Verfahren nach Anspruch 1 oder 2, **dadurch gekennzeichnet, dass** die Trocknungsabgase vor dem Einleiten in den Kalzinator durch den Klinkerkühler geleitet werden.

4. Verfahren nach Anspruch 3, **dadurch gekennzeichnet, dass** die Einleitung der Trocknerabgase in den Klinkerkühler an einer Stelle des Klinkerkühlers erfolgt, die vertikal unterhalb des Tertiärluftabzuges liegt.

5. Verfahren nach Anspruch 1, **dadurch gekennzeichnet, dass** der Vorwärmer eine Mehrzahl von Vorwärmerstufen aufweist und der eine Abwärmestrom von nach der letzten Vorwärmerstufe abgezweigtem Heißgas gebildet wird und dass der andere Wärmestrom von am Austritt einer vorgereihten Vorwärmerstufe, insbesondere der ersten Vorwärmerstufe abgezweigtem Heißgas gebildet wird.

6. Verfahren nach einem der Ansprüche 1 bis 5, **dadurch gekennzeichnet, dass** die vom Vorwärmer abgezweigten Heißgasströme einem Mischzyklon aufgegeben werden und dass das im Mischzyklon ausgeschiedene Heißmehl dem Kalzinator oder dem Rohmehl rückgeführt wird.

7. Verfahren nach einem der Ansprüche 1 bis 6, **dadurch gekennzeichnet, dass** das dem Trocknungsaggregat zugeführte Heißgas eine Temperatur von 300 - 600°C, insbesondere 500° - 600°C aufweist.

8. Verfahren nach einem der Ansprüche 1 bis 7, **dadurch gekennzeichnet, dass** das Trocknungsaggregat als Mahltrockner ausgebildet ist.

9. Vorrichtung zum Aufarbeiten von nassen, organische Komponenten enthaltenden Abfallstoffen, insbesondere Schlämmen in einer Zementklinkerherstellungsanlage, insbesondere zur Durchführung des Verfahrens nach einem der Ansprüche 1 bis 8, umfassend einen Klinkerofen (2), an dessen ausgabeseitigem Ende ein Klinkerkühler (6) angeschlossen ist und an dessen aufgabeseitigem Ende ein Kalzinator (4) und ein Vorwärmer (3) angeordnet sind, in denen Rohmehl im Gegenstrom zu den heißen Abgasen des Klinkerofens (2) vorgewärmt und kalziniert wird, und ein Trocknungsaggregat (18) für die nassen Abfallstoffe, das mit einer Heißgasleitung (20) verbunden ist, die von Abwärme aus dem Vorwärmer (3) gespeist ist, und dem ein Separator (36) zum Abtrennen der Trocknungsabgase von den getrockneten Abfallstoffen nachgeschaltet ist, wobei der Separator (36) und der Kalzinator (4) strömungsmäßig miteinander verbunden sind, um die Trocknungsabgase in den Kalzinator (4) zu leiten, **dadurch gekennzeichnet, dass** der Vorwärmer (3) wenigstens zwei voneinander in Durchströmungsrichtung beabstandete Entnahmestellen (21,26) zum Abzweigen von Heißgas über jeweils eine Zweigleitung (22,27) aufweist, dass Regelorgane (24,28), insbesondere Schieber zum Einstellen der Volumenströme des entnommenen Heißgases vorgesehen sind und dass die Heißgasströme einer Mischeinrichtung (25) zugeführt werden, deren Austrittsöffnung mit der Heißgasleitung (20) verbunden ist.

10. Vorrichtung nach Anspruch 9, **dadurch gekennzeichnet, dass** ein Abschnitt der strömungsmäßigen Verbindung des Separators (36) mit dem Kalzinator (4) von einem Tertiärluftkanal (46) gebildet ist, der den Tertiärluftabzug (44) des Klinkerkühlers (6) mit dem Kalzinator (4) verbindet.

11. Vorrichtung nach Anspruch 10, **dadurch gekennzeichnet, dass** die strömungsmäßige Verbindung des Separators (36) mit dem Kalzinator (4) eine Trocknerabgasleitung (40) umfasst, die in den Klinkerkühler (6) mündet.

12. Vorrichtung nach Anspruch 11, **dadurch gekennzeichnet, dass** die Trocknerabgasleitung (40) an einer Stelle in den Klinkerkühler (6) mündet, die unterhalb des Tertiärluftabzuges (44) liegt.

13. Vorrichtung nach Anspruch 9, **dadurch gekennzeichnet, dass** ein Temperaturfühler (32) zum Messen der Temperatur des Heißgases in der Heißgasleitung (20) vorgesehen ist, wobei die Messwerte des Temperaturfühlers (32) einer Steuereinrichtung (33) zugeführt werden, die mit den Regelorganen (24,28) zur Einstellung einer Heißgastemperatur von 300 - 600°C, insbesondere 500° - 600°C zusammenwirkt.

14. Vorrichtung nach einem der Ansprüche 10 bis 13, **dadurch gekennzeichnet, dass** der Vorwärmer (3) eine Mehrzahl von hintereinander geschalteten Vorwärmerstufen (8,9,10), insbesondere Schwebegaswärmetauschern aufweist und die eine Entnahmestelle (26) nach der letzten Vorwärmerstufe (9) und die andere Entnahmestelle (21) am Austritt einer vorgereihten Vorwärmerstufe, insbesondere der ersten Vorwärmerstufe (8) angeordnet ist.

15. Vorrichtung nach einem der Ansprüche 10 bis 14, **dadurch gekennzeichnet, dass** die Mischeinrichtung (25) von einem Mischzyklon gebildet wird, dessen Feststoffaustrag (29) für das ausgeschiedene Heißmehl mit dem Kalzinator (4) oder einer Rohmehlaufgabe- oder -transporteinrichtung (12) verbunden ist.

16. Vorrichtung nach einem der Ansprüche 10 bis 15, **dadurch gekennzeichnet, dass** das Trocknungsaggregat (18) als Mahltrockner ausgebildet ist.

## Claims

1. A method for reprocessing wet waste materials containing organic components in a cement clinker production plant, in particular sludges in a cement clinker production plant, in which raw meal is preheated in a preheater in countercurrent flow to the hot exhaust gases of a clinker furnace, and calcined in a calciner fired with alternative fuels, wherein the wet waste materials are dried in a drying unit using a hot gas produced from the preheater waste heat, the dried waste materials and the drier exhaust gases are discharged from the drying unit and the drier exhaust gases are fed into the calciner, **characterised in that** the preheater waste heat is drawn off from the preheater in at least two different points of the preheater at two different temperature levels, so that at least two waste heat streams are created and the temperature of the hot gas which is fed to the drying unit is adjusted by selecting the mixing ratio of the waste heat streams.

2. The method according to claim 1, **characterised in that** the drier exhaust gases are introduced into the calciner together with the tertiary air.

3. The method according to claim 1 or 2, **characterised in that** the drier exhaust gases are passed through the clinker cooler before they are introduced into the calciner.

4. The method according to claim 3, **characterised in that** the drier exhaust gases are introduced into the clinker cooler at a point of the clinker cooler that is positioned vertically below the tertiary air extractor.

5. The method according to claim 1, **characterised in that** the preheater comprises a plurality of preheater stages and the one waste heat stream is formed from hot gas that is tapped after the last preheater stage, and the other heat stream is formed from hot gas that is tapped at the outlet from an upstream preheater stage, particularly the first preheater stage.

6. The method according to any of claims 1 to 5, **characterised in that** the hot gas streams diverted from the preheater are forwarded to a mixing cyclone, and the hot meal separated in the mixing cyclone is returned to the calciner or the raw meal.

7. The method according to any of claims 1 to 6, **characterised in that** the hot gas supplied to the drying unit has a temperature of 300 - 600 °C, particularly 500 - 600 °C.

8. The method according to any of claims 1 to 7, **characterised in that** the drying unit is built in the form of a grinding dryer.

9. A device for reprocessing wet waste materials containing organic components, in particular sludges in a cement clinker production plant, particularly for carrying out the method according to any of claims 1 to 8, comprising a clinker furnace (2) with a clinker cooler (6) that is connected to the outlet end thereof, and with a calciner (4) and a preheater (3) arranged at the inlet end thereof, in which raw meal is preheated and calcined in countercurrent flow to the hot exhaust gases of the clinker furnace (2), and a drying unit (18) for the wet waste materials, which is connected to a hot gas line (20) that is supplied with waste heat from the preheater (3), and is followed by a separator (36) for separating the drier exhaust gases from the dried waste materials, whereby the separator (36) and the calciner (4) are in fluid communication with each other for the purpose of forwarding the drier exhaust gases to the calciner (4), **characterised in that** the preheater (3) comprises at least two tapping points (21,26) arranged at a distance from one another in the direction of flow for tapping hot gas via one branch line (22, 27) respectively, that control elements (24, 28), particularly sliders, are provided for adjusting the volume flows of the tapped hot gas, and that the hot gas streams are fed to a mixing device (25), the outlet opening of which is connected to the hot gas line (20).

10. The device according to claim 9, **characterised in that** a segment of the fluid communication between the separator (36) and the calciner (4) is formed by a tertiary air duct (46), which links the tertiary air extractor (44) in the clinker cooler (6) with the calciner (4).

11. The device according to claim 10, **characterised in that** the fluid communication between the separator (36) and the calciner (4) comprises a drier exhaust gas line (40) that opens into the clinker cooler (6).

12. The device according to claim 11, **characterised in that** the drier exhaust gas line (40) opens into the clinker cooler (6) at a point below the tertiary air extractor (44).

13. The device according to claim 9, **characterised in that** a temperature sensor (32) is provided for measuring the temperature of the hot gas (20) in the hot gas line, wherein the measured values of the temperature sensor (32) are transmitted to a controller (33) that cooperates with the control elements (24, 28) to set a hot gas temperature from 300 - 600 °C, particularly from 500 - 600 °C.

14. The device according to any of claims 10 to 13, **characterised in that** the preheater (3) comprises a plurality of serially connected preheater stages (8, 9, 10), particularly gas suspension heat exchangers, and the one tapping point (26) is arranged after the last preheater stage (9) and the other tapping point (21) is arranged at the outlet from an upstream preheater stage, particularly the first preheater stage (8).

15. The device according to any of claims 10 to 14, **characterised in that** the mixing device (25) is in the form of a mixing cyclone, from which the solid discharge (29) is connected to the calciner (4) or a raw meal infeed or transportation device (12) for the separated hot meal.

16. The device according to any of claims 10 to 15, **characterised in that** the drier unit (18) is built in the form of a grinding dryer.

## Revendications

1. Procédé de traitement de déchets humides contenant des composants organiques dans une installation de fabrication de clinker, en particulier de boues, dans une installation de fabrication de clinker, dans laquelle une farine crue est préchauffée dans un préchauffeur à contrecourant des effluents gazeux chauds d'un four à clinker et est calcinée dans un four de calcination chauffé par des combustibles alternatifs, les déchets humides étant séchés par utilisation d'un gaz chaud, produit à partir de la chaleur perdue du préchauffeur, dans un agrégat de séchage, les déchets séchés et les effluents gazeux du séchoir sont évacués de l'agrégat de séchage, et les effluents gazeux du séchoir sont introduits dans le four de calcination, **caractérisé en ce que** l'évacuation de la chaleur perdue du préchauffeur a lieu au niveau d'au moins deux points différents du préchauffeur ayant des niveaux de température différents l'un de l'autre, de telle sorte qu'il se forme au moins deux flux de chaleur perdue, et **en ce que** la température du gaz chaud envoyé dans l'agrégat de séchage est ajustée par le choix du rapport de mélange des flux de chaleur perdue.

2. Procédé selon la revendication 1, **caractérisé en ce que** l'introduction des effluents gazeux de séchage dans le four de calcination se fait avec l'air tertiaire.

3. Procédé selon la revendication 1 ou 2, **caractérisé en ce que** les effluents gazeux de séchage sont guidés à travers le refroidisseur de clinker avant l'introduction dans le four de calcination.

4. Procédé selon la revendication 3, **caractérisé en ce que** l'introduction des effluents gazeux du séchoir dans le refroidisseur de clinker a lieu en un point du refroidisseur de clinker qui est situé à la verticale en-dessous du point de soutirage de l'air tertiaire.

5. Procédé selon la revendication 1, **caractérisé en ce que** le préchauffeur comprend un grand nombre d'étages de préchauffage, et **en ce que** l'un des flux de chaleur perdue est formé par le gaz chaud dérivé après le dernier étage de préchauffage, et **en ce que** l'autre flux de chaleur est formé par le gaz chaud dérivé en sortie d'un étage de préchauffeur placé en amont, en particulier du premier étage du préchauffeur.

6. Procédé selon l'une des revendication 1 à 5, **caractérisé en ce que** les flux de gaz chaud dérivés du préchauffeur sont introduits dans un cyclone mélangeur, et **en ce que** la farine chaude séparée dans le cyclone mélangeur est renvoyée au four de calcination ou à la farine crue.

7. Procédé selon l'une des revendications 1 à 6, **caractérisé en ce que** le gaz chaud alimentant l'agrégat de séchage présente une température de 300 à 600 °C, en particulier de 500 à 600 °C.

8. Procédé selon l'une des revendications 1 à 7, **caractérisé en ce que** l'agrégat de séchage est exécuté sous la forme d'un séchoir broyeur.

9. Dispositif de traitement de déchets humides contenant des composants organiques, en particulier de boues, dans une installation de fabrication de clinker, en particulier pour la mise en oeuvre du procédé selon l'une des revendications 1 à 8, comprenant un four à clinker (2), à l'extrémité côté sortie duquel est raccordé un refroidisseur de clinker (6), et à l'extrémité côté alimentation duquel sont disposés un four de calcination (4) et un préchauffeur (3), dans lesquels la farine crue est préchauffée et calcinée à contrecourant des effluents gazeux chauds du four à clinker (2), et un agrégat de séchage (18) pour les déchets humides qui est raccordé à une conduite de gaz chaud (20), qui est alimentée par la chaleur perdue provenant du préchauffeur (3), et en aval duquel est monté un séparateur (36) destiné à séparer les effluents gazeux de séchage des déchets séchés, le séparateur (36) et le four de calcination (4) étant reliés l'un à l'autre par une liaison fluidique pour guider les effluents gazeux de séchage dans le four de calcination (4), **caractérisé en ce que** le préchauffeur (3) comprend au moins deux points de prélèvement (21, 26), situés à distance l'un de l'autre dans la direction de l'écoulement, pour dériver le gaz chaud via une conduite de dérivation (22, 27) respective, **en ce que** des organes de régulation (24, 28), en particulier des vannes, sont prévus pour ajuster les débits volumiques du gaz chaud prélevé, et **en ce que** les flux de gaz chaud alimentent un dispositif mélangeur (25) dont l'orifice de sortie est relié à la conduite de gaz chaud (20).

10. Dispositif selon la revendication 9, **caractérisé en ce qu'**une partie de la liaison fluidique du séparateur (36) avec le four de calcination (4) est formée par un canal d'air tertiaire (46), qui relie le point de soutirage de l'air tertiaire (44) du refroidisseur de clinker (6) au four de calcination (4).

11. Dispositif selon la revendication 10, **caractérisé en ce que** la liaison fluidique du séparateur (36) avec le four de calcination (4) comprend une conduite des effluents gazeux du séchoir (40), qui débouche dans le refroidisseur de clinker (6).

12. Dispositif selon la revendication 11, **caractérisé en ce que** la conduite des effluents gazeux du séchoir (40) débouche en un point du refroidisseur de clinker (6) qui se trouve en-dessous du point de soutirage de l'air tertiaire (44).

13. Dispositif selon la revendication 9, **caractérisé en ce qu'**un capteur de température (32) est prévu pour mesurer la température du gaz chaud dans la conduite de gaz chaud (20), les valeurs de mesure du capteur de température (32) étant transmises à un dispositif de commande (33) qui coopère avec les organes de régulation (24, 28) pour ajuster une température de gaz chauds entre 300 et 600 °C, en particulier entre 500 et 600 °C.

14. Dispositif selon l'une des revendications 10 à 14, **caractérisé en ce que** le préchauffeur (3) comprend un grand nombre d'étages de préchauffeur (8, 9, 10) montés les uns derrière les autres, en particulier des dispositifs de préchauffage par mise en suspension dans les gaz, et **en ce qu'**un point de prélèvement (26) est disposé en aval du dernier étage de préchauffeur (9) et l'autre point de prélèvement (21) en sortie d'un étage de préchauffeur placé précédemment, en particulier du premier étage de préchauffeur (8).

15. Dispositif selon l'une des revendications 10 à 14, **caractérisé en ce que** le dispositif mélangeur (25) est formé par un cyclone mélangeur, dont la sortie (29) de matières solides pour la farine chaude séparée est reliée au four de calcination (4) ou à un dispositif d'alimentation ou de transport de farine crue (12).

16. Dispositif selon l'une des revendications 10 à 15, **caractérisé en ce que** l'agrégat de séchage (18) est conçu en tant que séchoir broyeur.
